Europäisches Patentamt

European Patent Office

Office européen des brevets

(19)

(11) Veröffentlichungsnummer: **0 143 912**

**A2**

(12) **EUROPÄISCHE PATENTANMELDUNG**

(21) Anmeldenummer: **84110524.0**

(22) Anmeldetag: **04.09.84**

(51) Int. Cl.⁴: **H 04 L 25/49**

(30) Priorität: 07.09.83 DE 3332285

(43) Veröffentlichungstag der Anmeldung:
12.06.85 Patentblatt 85/24

(84) Benannte Vertragsstaaten:
AT BE CH DE FR GB IT LI NL SE

(71) Anmelder: Siemens Aktiengesellschaft
Berlin und München Wittelsbacherplatz 2
D-8000 München 2(DE)

(72) Erfinder: Pospischil, Reginhard, Dr. Dipl.-Ing.
Gabriel-v.-Seidl-Strasse 15
D-8032 Gräfelfing(DE)

(54) **Codierer für den Zweipegel-HDB3-Code.**

(57) Codierer für den Zweipegel-HDB3-Code, der insbesondere an digitalen Schnittstellen eingesetzt ist, an denen pseudoternäre Signale im HDB3-Code in für die Lichtwellenleiterübertragung geeignete Signale umgesetzt werden und der im Anschluß an den Schnittstellenregenerator nur aus einem UND-Gatter mit drei Eingängen und einem verdrahteten ODER-Gatter besteht.

FIG 1a

FIG 1b

**0143912**

## Codierer für den Zweipegel-HDB3-Code

Die Erfindung betrifft einen Codierer für die Erzeugung von Signalen im Zweipegel-HDB3-Code zum Anschluß an Ausgänge eines Schnittstellenregenerators, mit dessen Taktausgang und mit dessen einem von zwei Regeneratorausgängen für die regenerierten Impulse jeweils einer Polarität die Eingänge eines UND-Gatters verbunden sind.

In der CCITT-Empfehlung G.703 sind abhängig von der Hierarchiestufe für die Verbindungsleitungen zwischen digitalen Übertragungseinrichtungen Schnittstellencodes festgelegt. Für alle in der genannten Empfehlung aufgeführten Bitraten von 34 kbit/s bis 45 Mbit/s sind dabei pseudoternäre Schnittstellencodes festgelegt. Diese Codes mit jeweils drei Amplitudenstufen sind aber für eine Übertragung über Lichtwellenleiter nicht besonders geeignet. Die Übertragung digitaler Signale über Lichtwellenleiter erfolgt in der Regel mit einem zweistufigen Übertragungscode. Meist werden dabei binäre Blockcode mBnB verwendet, bei denen Blöcke mit m binären Zeichen in Blöcke mit einer größeren Anzahl n binärer Zeichen umgewandelt werden. Zur Rückumwandlung auf der Empfangsseite ist eine Blocksynchronisation erforderlich, die im allgemeinen nicht für jedes periodische binäre Eingangssignalmuster möglich ist. Für beliebige binäre Eingangssignale müssen diese deshalb vor der sendeseitigen Codeumsetzung verwürfelt und entsprechend empfangsseitig nach der Decodierung entwürfelt werden. Für den Übergang vom Schnittstellencode zu einem binären Leitungscode besitzt deshalb ein Leitungsendgerät neben dem Schnittstellenregenerator die Kettenschaltung eines Umwandlers vom Schnittstellen-

Ah 1 Gru / 25.08.1983

code in den Binärcode, einem Verwürfler und einem Umcodierer vom Binärcode in den eigentlichen Übertragungscode, einen Binär-Blockcode.

Aus den Technischen Mitteilungen PTT 7/1979, Seiten 253 bis 266 ist insbesondere aus den Seiten 256 bis 258 ein sogenannter Zweipegel-HDB3-Coder mit einem Codierer und einem Decodierer bekannt. Das Bildungsgesetz für den genannten Code lautet, daß jeder positive Einszustand im HDB3-Code mit NRZ-Format in eine Bithälftenkombination "11" umgewandelt wird, daß jeder negative Einszustand im HDB3-Code in eine Bithälftenkombination "00" umgewandelt wird und daß jeder Nullzustand im HDB3-Coder in entweder die Bithälftenkombination "01" oder in die Bithälftenkombination "10" umgewandelt wird.

Diese Umwandlung müßte an jeder Schnittstelle erfolgen, an die sich eine Lichtwellenleiterverbindung anschließt. Damit ist diese Umwandlung so häufig erforderlich, daß eine Aufwandsverringerung an dieser Stelle für das Gesamtsystem vorteilhaft ist.

Die Aufgabe bei der vorliegenden Erfindung besteht also darin, einen Codierer der eingangs erwähnten Art zu schaffen, der möglichst wenig aufwendig ist.

Erfindungsgemäß wird die Aufgabe dadurch gelöst, daß ein UND-Gatter mit wenigstens drei Eingängen vorgesehen ist, von denen wenigstens zwei invertierend sind, daß zwei invertierende Eingänge getrennt mit den Regeneratorausgängen verbunden sind, daß der Ausgang des UND-Gatters mit einem ersten Eingang eines ODER-Gatters verbunden ist, dessen Ausgang den Codiererausgang darstellt, daß ein zweiter Eingang des ODER-Gatters wahlweise entweder mit dem Regeneratorausgang für die positiven regenerierten Impulse und dazu der Taktausgang des Schnittstellenregenerators mit einem dritten invertierenden Eingang des UND-Gatters verbunden ist oder daß der zweite Eingang des ODER-Gatters mit dem Regeneratorausgang für die negativen regenerierten Impulse und dazu der Taktausgang des Schnittstellenregenerators mit einem dritten, nichtinvertierenden Eingang des ODER-Gatters verbunden ist.

Der Codierer erfordert also lediglich die zusätzliche Verwendung eines UND-Gatters und eines ODER-Gatters, wobei bei Realisierung des ODER-Gatters als sogenanntes verdrahtetes ODER-Gatter der Codierer praktisch nur ein einziges Gatter erfordert und dabei neben geringem Aufwand und geringer Stromaufnahme auch über eine hohe Übertragungsgeschwindigkeit verfügt. Von wesentlicher Bedeutung ist außerdem die Möglichkeit, mit dem erfindungsgemäßen Codierer auch Signale in den HDBn-, CHDBn- und BnZS-Codes zu erzeugen.

Die Erfindung soll im folgenden anhand der Zeichnung näher erläutert werden. In der Zeichnung zeigt

Fig. 1 zwei Varianten des erfindungsgemäßen Codierers und
Fig. 2 ein Impulsdiagramm zur Fig. 1.

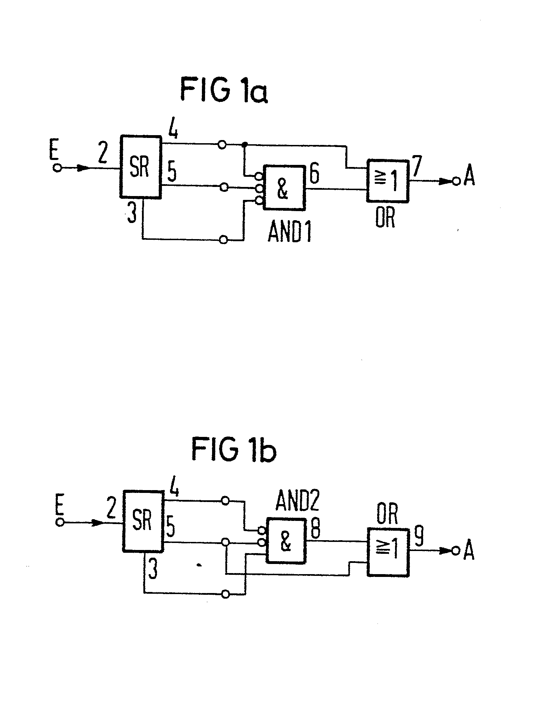

·In der Fig. 1 sind zwei Varianten des erfindungsgemäßen Codierers dargestellt, die beide einen mit dem Eingang E für die pseudoternär codierten Signale verbundenen Schnittstellenregenerator SR, ein UND-Gatter AND1 bzw. AND2 und ein ausgangsseitiges ODER-Gatter OR enthalten. Der Schnittstellenregenerator SR stellt einen üblichen PCM-Regenerator dar, der die am Eingang E aufgenommenen pseudoternären Signale amplituden- und zeitmäßig regeneriert und dabei die pseudoternären Signale in zwei unipolare Impulszüge umwandelt, wobei der eine Impulszug, der beispielsweise über die Leitung 4 vom Schnittstellenregeneratorausgang abgegeben wird, den positiven Eingangssignalimpulsen und der zweite unipolare Impulszug über die Leitung 5 den negativen Eingangsimpulsen des pseudoternären Signals entspricht. Beide Impulszüge werden an invertierende Eingänge eines nachgeschalteten UND-Gatters AND1, AND2 abgegeben. Der Ausgang des UND-Gatters ist jeweils mit einem Eingang eines nachgeschalteten ODER-Gatters OR verbunden. Dieses ODER-Gatter ist im Hinblick auf seine Funktion dargestellt, in der Praxis aber durch ein sogenanntes verdrahtetes ODER-Gatter realisiert, so daß sich der erfindungsgemäße Codierer auf ein UND-Gatter mit drei Eingängen beschränkt. Der andere Eingang des ODER-Gatters ist mit einem der beiden Regeneratorausgänge verbunden, an denen ein Impulszug des regenerierten Signals ansteht. Bei einer Verbindung mit dem Ausgang, an dem der Impulszug entsprechend den positiven Eingangssignalen ansteht, ist als dritter Eingang des UND-Gatters AND1 ein weiterer invertierender Eingang vorgesehen, der mit dem Taktausgang des Schnittstellenregenerators SR verbunden ist. Im Falle daß der zweite Eingang des ODER-Gatters mit dem Ausgang des Schnittstellenregenerators verbunden ist, an dem der den negativen Eingangsimpulsen entsprechende Impulszug ansteht, ist der Taktausgang dieses Regenerators mit einem nichtinvertierenden Eingang des UND-Gatters AND2 entsprechend Fig. 1b verbunden.

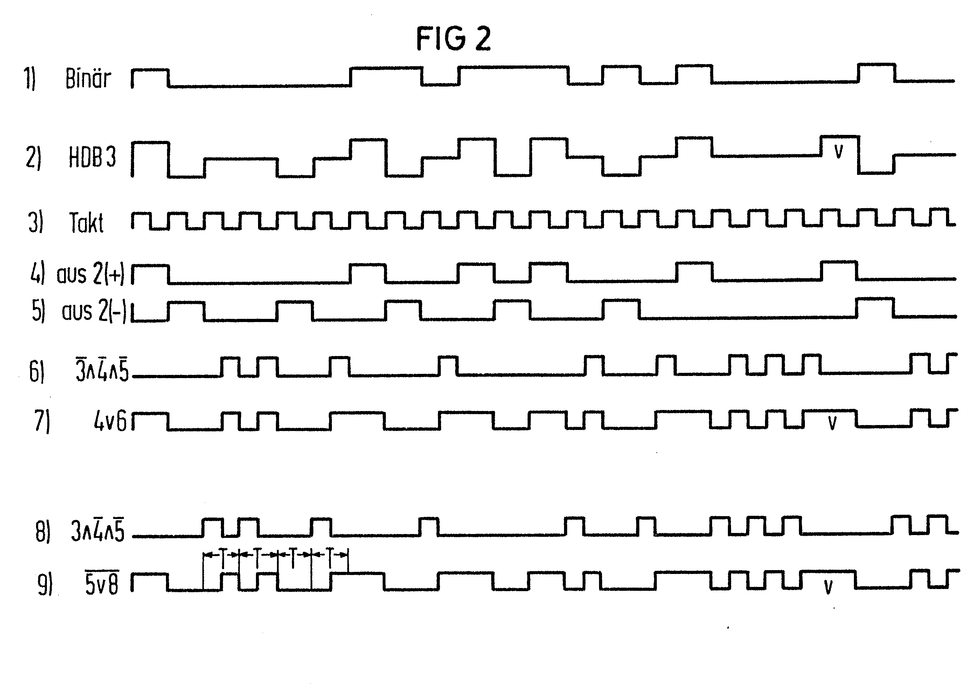

Zur Erläuterung der Funktion dient das Impulsdiagramm nach der Fig. 2, das in der Zeile 1 das in der vorliegenden Schaltung nicht auftretende ursprüngliche Binärsignal zeigt. In der Zeile 2 ist das entsprechende HDB3-codierte Signal dargestellt, das in gegebenenfalls durch die Übertragung verschliffener Form dem Eingang E des Schnittstellenregenerators SR zugeführt wird. In der Zeile 3 ist der im Schnittstellenregenerator erzeugte Takt dargestellt, wobei eine Taktperiode der Zeichendauer des binären oder des HDB3-Codes entspricht. In der Zeile 4 sind die am Ausgang 4 des Schnittstellenregenerators auftretenden Impulse dargestellt, die einen unipolaren Impulszug ergeben und die positiven Impulse des Eingangssignals nach Zeile 2 repräsentieren. Entsprechend sind in Zeile 5 die am Ausgang 5 des Schnittstellenregenerators auftretenden Impulse dargestellt, die den negativen Eingangsimpulsen entsprechen. Die UND-Verknüpfung der Ausgangssignale des Schnittstellenregenerators über die invertierenden Eingänge des ersten UND-Gatters AND1 führt zu einer Impulsfolge entsprechend Zeile 6, die am Ausgang 6 des ersten UND-Gatters auftritt. Eine Veroderung dieses Signalzuges mit dem Impulszug am Ausgang 4 des Schnittstellenregenerators tritt am Ausgang 7 des ODER-Gatters auf und ist entsprechend in Zeile 7 dargestellt. Beim Vergleich mit Zeile 2 zeigt sich, daß die positiven Eingangsimpulse des HDB3-codierten Signals als 11-Impulse in Zeile 7 wieder auftreten, während negative Eingangsimpulse als "00"-Folge und der Nullzustand als "01"-Bithälftenkombination erscheint.

In Zeile 8 sind die am Ausgang 8 des zweiten Und-Gatters AND2 auftretenden Impulse dargestellt, die sich im zweiten UND-Gatter aus den invertierten Signalen an den Ausgängen 4 und 5 des Schnittstellenregenerators und dem nichtinvertierten Taktsignal vom Ausgang 3 ergeben. Die Veroderung dieser Impulsfolge mit den Signalen am Ausgang 5 des Schnittstellenregenerators, die die negativen Eingangsimpulse repräsentieren, führt zum Signal am Ausgang 9 des ODER-Gatters, das in Zeile 9 des Impulsdiagramms dargestellt ist. Es zeigt sich, daß die Ausgangssignale der Zeilen 7 bzw. 9 voll miteinander übereinstimmen.

2 Patentansprüche
2 Figuren

0143912

Patentansprüche

1. Codierer für die Erzeugung von Signalen im Zweipegel-HDB3-Code zum Anschluß an Ausgänge eines Schnittstellenregenerators, mit dessen Taktausgang und mit dessen einem von zwei Regeneratorausgängen für die regenerierten Impulse jeweils einer Polarität die Eingänge eines UND-Gatters verbunden sind, d a d u r c h   g e k e n n z e i c h n e t , daß ein UND-Gatter mit wenigstens drei Eingängen vorgesehen ist, von denen wenigstens zwei invertierend sind, daß zwei invertierende Eingänge jeweils getrennt mit den Regeneratorausgängen verbunden sind, daß der Ausgang des UND-Gatters mit einem ersten Eingang eines ODER-Gatters verbunden ist, dessen Ausgang den Codiererausgang darstellt, daß ein zweiter Eingang des ODER-Gatters wahlweise entweder mit dem Regeneratorausgang für die positiven regenerierten Impulse und dazu der Taktausgang des Schnittstellenregenerators mit einem dritten invertierenden Eingang des UND-Gatters verbunden ist oder daß der zweite Eingang des ODER-Gatters mit dem Regeneratorausgang für die negativen regenerierten Impulse und dazu der Taktausgang des Schnittstellenregenerators mit einem dritten, nichtinvertierenden Eingang des ODER-Gatters verbunden ist.

2. Codierer nach Patentanspruch 1, d a d u r c h   g e - k e n n z e i c h n e t , daß das ODER-Gatter als sogenanntes verdrahtetes ODER-Gatter realisiert ist.

## FIG 1a

## FIG 1b

# FIG 2

1) Binär

2) HDB 3

3) Takt

4) aus 2(+)

5) aus 2(-)

6) $\overline{3} \wedge \overline{4} \wedge 5$

7) 4 v 6

8) $3 \wedge \overline{4} \wedge \overline{5}$

9) $\overline{5} \vee \overline{8}$

0143912